# EUROPEAN PATENT APPLICATION

(11) **EP 3 567 081 A1**
(43) Date of publication of application: **13.11.2019**
(21) Application number: 19173465.6
(22) Date of filing: 09.05.2019
(51) Int. Cl.: C09B 67/20, C09B 67/42, C09D 171/02

(54) **SOLID COLORING COMPOSITION AND PREPARATION PROCESS THEREOF**

(30) Priority: 10.05.2018 IT 201800005251
(71) Applicant: Novachem Industriale S.r.l., 20025 Legnano (Milan) (IT)
(72) Inventor: QUETTI, Matteo, 20025 Legnano (MI) (IT)
(74) Representative: Marturano, Pasqualino

(57) **Abstract**

The present invention relates to a solid coloring composition for universal use comprising: at least one pigment; at least one polyethylene glycol having a number average molecular weight (Mₙ) within the range 300 D - 1800 D, said polyethylene glycol being in an amount within the range 1 - 60% by weight with respect to the total weight of said at least one pigment. The invention also concerns a process for preparing said solid coloring composition and the use of said solid coloring composition for coloring a liquid phase.

## Description

The present invention relates to a solid coloring composition and the relative preparation process. The solid coloring composition according to the present invention is particularly adapted to color liquid phases, whether they are aqueous or based on organic solvents and inorganic solvents such as, for example, inks, coating compositions, paints, polymer compositions, mineral oils, etc. and also liquid phases free from solvents such as, for example, the polymeric compositions of polyurethane systems (e.g. for producing foams, soles for shoes), oligomer methyl methacrylate based systems (household and furnishing items, etc.) and polymer materials in the molten state (plastic materials processed by injection and extrusion).

As is known, pigments are solid particles substantially insoluble in the liquid phase in which they are incorporated in order to confer a desired color thereto.

The incorporation in a liquid phase of a pre-dispersed pigment, which was therefore ground in advance to disaggregate the particles so as to be able to substantially increase the surface area of the pigment to be exposed to light, and possibly treated with wetting agents to reduce the possible re-aggregation of the particles themselves, allows the efficacy of the coloring process to be notably increased (coloring performance) with respect to the use of the same pigment in substantially pure i.e. untreated form. In fact, the latter generally contains a fraction of powders in aggregated form and for that reason it has a substantially lower coloring performance; furthermore, the liquid phase containing the pure pigment is not generally stable as the larger pigment particles tend to settle and separate more easily from the liquid phase.

In many industrial processes such as, for example, processes for manufacturing paints, inks, compositions for functional coatings, etc., the coloring of a liquid phase is generally performed by incorporating the pigments in pre-dispersed form. Thus, the pigments are added to the liquid phase to be colored in the form of concentrated coloring compositions. The coloring compositions are obtained by mixing a pigment with a liquid or solid carrier agent, which is able to dissolve or be distributed uniformly and quickly in the liquid phase to be colored. To promote the dispersion of the pigment in the liquid phase and the stability of the dispersion, the coloring compositions can also contain other components such as additives (e.g. wetting agents, dispersing agents, emulsifiers, etc.) and solvents.

The coloring compositions can be used in fluid form, generally in the form of paste, or in solid form.

The use of pre-dispersed pigments in the form of solid or liquid dyes allows to prevent the pigment being able to be dispersed and then ground into the whole finished product to be colored, with clear savings in terms of time and production costs. Furthermore, the quantity of pigment used with the coloring compositions for obtaining a determined coloring effect is lower (i.e. the coloring performance is higher) with respect to the use of the same pigment dispersed and then ground into the entire finished product to be colored, and even more so with respect to the use of the pure pigment in non pre-dispersed form.

The solid coloring compositions known in the state of the art are generally in separated form such as powders, granules or chips or flakes.

Such solid coloring compositions comprise at least one pigment and at least one carrier agent, and are therefore substantially free from liquid components such as water or organic solvents. In the state of the art, the carrier agent of solid coloring compositions is generally a polymer compound such as, for example, a nitrocellulose resin, a vinyl polymer, an acrylic polymer or the like. These compositions are widely used for coloring systems intended for the production of inks, paints and the like. In other cases the pigments are added, in high concentration, to a high molecular weight polymer (plastic material). Such dispersions of pigments in plastic materials, also known as masterbatches, are used in the art for incorporating pigments into plastic materials, possibly together with other additives, intended for example for extrusion and injection processes.

The choice of the carrier agent is generally based on the binding and wetting power thereof towards pigments, and the compatibility and solubility thereof in the liquid system to be colored, or the affinity thereof with the plastic material in dry plastic material processing.

Solid coloring compositions are now widely used to incorporate pigments into liquid phases based on organic or water based solvents. However, the Applicant is not aware of solid coloring compositions adapted for coloring organic liquid phases free from solvents, such as polyurethane systems and oligomer methyl methacrylate based systems.

Besides being characterized by a higher coloring performance with respect to liquid or paste based coloring compositions, and even more so with respect to pure pigments or presscakes, solid coloring compositions offer the further advantage of being easy to dose within an industrial process, also automatically.

In general, solid coloring compositions offer the following advantages: high coloring performance; high storage stability; substantial absence of volatile solvents; easy handling and dosing, without soiling. Furthermore, solid coloring compositions do not generate packaging to be disposed of classified as special or toxic/harmful waste.

The solid coloring compositions known in the state of the art have various drawbacks that to date have not been resolved.

In relation to the coloring of water-based liquid phases, a first drawback is generally the reduced dispersion speed of the pigment in the aqueous liquid phase, due to the limited solubility and/or dissolution speed in water of the carrier agents used to date. To increase the dispersion speed of the pigment, in the state of the art it is also known that alkalizing chemical compounds can be resorted to (e.g. ammonia or amine compounds) in the liquid phase which, by raising the pH, promote the solubilization of the carrier agent. The presence of such pH modifying compounds can cause various drawbacks in the subsequent colored liquid processing step. To promote the solubilization of the carrier agent, it is also known to heat the liquid phase that receives the solid coloring composition. However, as well as increasing the energy consumptions of the process, the heat treatment is not always compatible with the chemical nature of the liquid phase to be colored. Furthermore, even when both of the aforesaid expedients are adopted, i.e. the addition of alkalizing compounds and the heating of the aqueous phase, the pigment dispersion times remain rather high.

A further drawback of the solid coloring compositions of the state of the art is connected with the fact that their components, in particular the polymer compounds used as carrier agents, are often incompatible with the use of the colored liquid phase in the production of food products, cosmetics, pharmaceuticals and the like, where the permitted substances are regulated by strict standards to protect human health and the environment. This clearly significantly restricts the field of application of solid coloring compositions of the prior art.

A further drawback of solid coloring compositions of the prior art lies in the fact that they are generally used to incorporate a pigment selectively into aqueous liquid phases or into organic liquid phases, as the carrier agent is generally only selectively analogous to one of the two phase types. This implies, for example, that a same solid coloring composition cannot be used to incorporate a pigment into liquid phases having a substantially different chemical composition. To overcome this drawback, in practice it is necessary to have a significant number of different coloring compositions, i.e. containing different carrier agents in order to be able to color liquid phases of a different composition as required. In the pigment sector, it is therefore highly desirable to be able to have different "universal" solid coloring compositions, i.e. coloring compositions that can be used effectively either in aqueous liquid phases, or in organic or inorganic liquid phases, but also for coloring plastic materials based on melt-processable polymers, e.g. in the form of masterbatches.

WO 2012/051406 describes solid coloring compositions for use in aqueous systems, wherein the carrier agent comprises a surfactant, e.g. an alcohol ethoxylate. The coloring compositions are prepared by adding the powdered pigment to the surfactant, after heating the latter to a temperature greater than its melting point. The surfactant-pigment mixture is then ground to maximize the exposed surface area of the pigment, then cooled until it solidifies at room temperature and crushed to obtain a solid coloring composition having particles of the desired size. The coloring compositions described in WO 2012/051406 can also contain polyvinyl alcohol, polyvinylpyrrolidone, polyethylene glycol and starches.

WO 2014/147522 in the name of the same Applicant describes solid coloring compositions wherein the carrier agent comprises modified starch soluble in water at low temperatures. These compositions have a high dissolution speed of the carrier agent in water and, therefore, high dispersion speed of the pigment in the aqueous liquid phase to be colored. However, coloring compositions containing alcohol ethoxylate or modified starch are not adapted to be used for coloring organic liquid phases.

Solid coloring compositions containing polyethylene glycol are described in US 6132505 A, CN 104559359 B, US 2013/084338 A1 and FR 2903699 A1.

The general aim of the present invention is to overcome the drawbacks of the solid coloring compositions of the state of the art.

Within the context of such general aim, an aim of the present invention is to provide a solid coloring composition, which can be used effectively to disperse a pigment in aqueous, organic or inorganic liquid phases.

A second aim of the present invention is to provide a solid coloring composition that allows a pigment to be effectively and quickly dispersed in an aqueous, organic or inorganic liquid phase, also without resorting to the addition of alkalizing additives or high energy mechanical homogenizing systems.

A further aim of the present invention is to provide a process for preparing the aforesaid solid coloring composition that is cheap and easy to realize.

The Applicant has now found that these and other aims, which will appear more clearly hereinafter, can be reached by a solid coloring composition that comprises at least one pigment and at least one polyethylene glycol (PEG) having a number average molecular weight (Mn) within the range 300-1800 D (Dalton).

In fact, it has been observed that the use of the aforesaid polyethylene glycol as a carrier agent allows to obtain solid coloring compositions that can be used to effectively and quickly incorporate a pigment into a wide variety of aqueous, organic and inorganic liquid phases, such as liquid phases containing organic solvents, liquid phases also free from solvents, polymeric liquid compositions (e.g. monomers, oligomers, pre-polymers, polymers and the like), with or without solvents; they can also be used, for example, in the form of masterbatches, to incorporate at least one pigment into a polymeric plastic material processed for example through extrusion or injection.

The chemical characteristics of the PEG used according to the present invention also make the solid coloring compositions compatible with use in processes for the preparation of food, pharmaceutical and cosmetic products.

Furthermore, the solid coloring compositions contained in the aforesaid PEG, when incorporated into a liquid phase, do not significantly alter the viscosity of the latter, the PEG not having substantial thickening effects.

Thanks to the affinity of the PEG with a wide variety of aqueous, organic and inorganic phases (e.g. resins of various kinds (polyesters, etc.), plasticizers, reactive polymers, plastic materials, etc.), such a solid coloring composition according to the present invention can be used to incorporate a pigment into liquid phases even having very different chemical compositions from each other. This allows current problems to be solved, connected with the need to be equipped with a wide range of different coloring compositions for incorporating the same pigment into liquid phases with different compositions, consequently simplifying industrial coloring processes.

According to a first aspect, the present invention therefore concerns a solid coloring composition comprising:
- at least one pigment;
- at least one polyethylene glycol having a number average molecular weight (Mₙ) within the range 300 - 1800 D, said polyethylene glycol being in an amount within the range 1 - 60% by weight with respect to the total weight of said at least one pigment.

According to another aspect, the present invention concerns a process for preparing the aforesaid solid coloring composition which comprises the steps of:
(a) forming a paste comprising:
   - at least one pigment,
   - at least one polyethylene glycol having a number average molecular weight (Mₙ) within the range 300 D - 1800 D, said polyethylene glycol being in an amount within the range 1% - 60% by weight with respect to the total weight of said at least one pigment.
   - optionally, at least one liquid component to regulate the viscosity of the paste;
(b) grinding said paste;
(c) drying said paste to obtain said solid coloring composition.

According to another aspect, the present invention concerns a pigmentary paste comprising the aforesaid solid coloring composition.

According to a further aspect, the present invention concerns a process for coloring a liquid phase comprising:
(I) providing a solid coloring composition comprising:
   - at least one pigment;
   - at least one polyethylene glycol having a number average molecular weight (Mₙ) within the range 300 D - 1800 D, said polyethylene glycol being in an amount within the range 1 - 60% by weight with respect to the total weight of said at least one pigment.
(II) incorporating said solid coloring composition into said liquid phase.

According to a further aspect, the present invention concerns the use of the aforesaid solid coloring composition as a masterbatch for incorporating at least one pigment in a melt-processable polymeric material.

For the purposes of the present description and of the appended claims, the verb "to comprise" and all the terms deriving therefrom also include the meaning of the verb "to consist of" and the terms deriving therefrom.

The numerical limits and ranges expressed in the present description and appended claims also include the numerical value or numerical values mentioned. Furthermore, all the values and sub-intervals of a limit or numerical range must be considered to be specifically included as though they had been explicitly mentioned.

The pigments that can be used for the purpose of the present invention are organic pigments and inorganic pigments, both natural and synthetic. The solid coloring composition can also comprise a mixture of two or more pigments.

Examples of inorganic pigments include oxides, hydroxides and salts of metallic and non-metallic elements, such as oxides, hydroxides or salts of Fe, Ti, Zn, Cu, Mn.

Examples of organic pigments include nitrogen pigments, phthalocyanine pigments and quinacrine pigments.

The PEG has a number average molecular weight (Mₙ) within the range 300 D - 1800 D, preferably within the range 400 D - 1000 D, even more preferably within the range 500 D - 800 D. For the purpose of the present invention, the Mₙ of the PEG is intended to be measured through gel permeation chromatography (GPC) using polystyrene as standard.

Preferably, the PEG has a melting point in the range 0°C - 50°C, more preferably in the range 15 - 35 °C.

It has been observed that the PEG having the aforesaid number average molecular weight Mₙ is easily soluble or dispersible in a wide range of aqueous, organic and inorganic liquid phases, thus promoting the incorporation of the pigment present in the solid coloring composition. It is also easily mixable with the pigment in the necessary quantities to prepare the solid coloring compositions, as described in detail below.

The PEG is present in the solid coloring composition in an amount comprised in the range 1% - 60% by weight with respect to the total weight of the pigment, more preferably within the range 5% - 40%, even more preferably within the range 9% - 15%.

In another embodiment, the PEG is present in the solid coloring composition in an amount comprised in the range 20% - 35% by weight with respect to the total weight of the pigment, preferably within the range 22% - 32%, more preferably within the range 24% - 30%. It has been observed that the use of PEG in these amounts allows a paste to be prepared with suitable viscosity to obtain finely subdivided pigment particles - and therefore with high coloring performance - and, at the same time, effectively wet by the PEG, with consequent greater stability of the coloring composition over time (during storage the formation of agglomerates is minimum).

The solid coloring composition can further comprise one or more additives such as, for example, surfactants, wetting agents, dispersing agents (e.g. Byk LP-N 21708 or Afcona 4595), spreading agents, emulsifying agents or glycols such as, for example, diethylene glycol (DEG).

Preferably, the solid coloring composition according to the present invention comprises at least one surfactant. The surfactant may be cationic, anionic, non-ionic or amphoteric.

The Applicant has found it particularly useful to use at least one surfactant selected from: sodium dioctylsulphosuccinate (or docusate sodium), sodium lauryl sulfate (sodium dodecyl sulfate), sodium lauryl ether sulfate and mixtures thereof; and an oil selected from: linseed oil, soybean oil, glycerine and mixtures thereof.

These surfactants have an emulsifying, wetting and/or imbibing action towards the pigment, thus facilitating the dispersion into the liquid phase to be colored and contributing to the stability of the dispersion (e.g. absence of separation of the pigment by decanting). Furthermore, docusate sodium, linseed oil, soybean oil and glycerine are ingredients that can also be used in the preparation of food, pharmaceutical and/or cosmetic products.

Preferably, the additives are present in the solid coloring composition in a total amount in the range 1% - 55% by weight, more preferably in the range 9% - 30%, with respect to the total weight of the pigment.

In a preferred embodiment of the present invention, the solid coloring compositions are prepared by mixing together, at room temperature (25°C), at least one pigment and at least the PEG having molecular weight Mₙ within the range 300-1800 D to form a paste.

The pigments can be used for preparing the paste both in dry powder form and in presscake form. The possibility to use a presscake represents an advantage of the process according to the present invention with respect to the prior art, as it does not make it essential to use pigments already in finely subdivided form.

The paste is subsequently ground to reduce or homogenize the size of the pigment particles. The ground paste is then dried to remove the moisture and any volatile components present, obtaining the final solid coloring composition. This grinding step has the function of obtaining pigment particles having the desired sizes.

To obtain a paste with suitable viscosity for grinding, i.e. a plastic and malleable paste, the mixture containing the pigment and PEG can also optionally comprise at least one liquid component. The optional liquid component may be for example water or an organic solvent, preferably a C₂-C₆ alcohol (e.g. ethanol, propanol, etc.) and related mixtures. Preferably, the liquid component has a boiling point higher than or equal to 50°C, preferably in the range 50°C - 120°C, so that it can be easily removed from the coloring composition by heating. In particular, the optional liquid component is used when the PEG is in solid form at the mixing temperature with the pigment or when the viscosity thereof is excessively high to allow effective grinding.

The amount of liquid component used mainly varies as a function of the type of pigment used, in particular the capacity thereof to absorb such liquid component. Preferably, the total amount of liquid component is within the range 8% - 60% by weight, more preferably within the range 11% to 35% by weight, with respect to the total weight of the pigment.

The solid coloring compositions according to the present invention, as well as the pigment, can also contain other components that are to be incorporated into the liquid phase to be colored. In the case of plastic materials, for example, solid coloring compositions can contain dispersing agents, polymerization promoters or inhibitors, UV ray absorbers, or the like.

In the preparation of the paste, the components can be added in any order. Preferably, the pigment or pigments are first mixed with the PEG, then any other additives are added and finally the liquid component is added.

The mixing of the essential and optimal ingredients of the coloring composition for forming the paste to be subjected to grinding can be performed with devices known to a person skilled in the art of producing pigmentary systems. Preferably, the mixing is performed at room temperature.

Preferably, the paste is initially grinded at room temperature and, then, heated to a progressively higher temperature, e.g. up to about 50°C, for removing a part of the volatile components without making the viscosity of the paste increase excessively.

The grinding step mainly has the aim of obtaining pigment particles having more suitable sizes for the specific use for which the pigment is intended; in fact, the coloring performance of the coloring composition also depends on the fineness of the pigment.

Preferably, the paste is ground to obtain pigment particles having an average size (Dv50) in the range 0.02 - 100 micrometres (µm), more preferably in the range 0.05 - 50 micrometres, said average size Dv50 being measured through laser diffraction (ISO 13320:2009) .

Preferably, the average size Dv50 of the particles is less than or equal to 30 micron, more preferably in the range 0.1 - 30 micrometres.

Once the desired grinding fineness has been reached, the paste is dried in order to substantially completely remove the volatile components, obtaining a solid coloring composition.

Preferably, the drying of the paste is performed at a temperature within the range 85°C - 120°C.

The volatile components present in the paste mainly comprise water and solvents used as viscosity regulators, water and solvents present in the additives (e.g. surfactants in aqueous solution) and atmospheric moisture.

Preferably, the water content of the dried solid coloring composition is less than 2.5% by weight.

The preparation of the solid coloring compositions according to the present invention can be carried out with the aid of devices known to a person skilled in the art in the field of pigments manufacturing. In particular, the mixing can be performed with a Z-blade mixer and the grinding with a cylindrical grinder, preferably with two cylinders (calendar), or in extruders (e.g. single-screw or preferably twin-screw).

In a preferred embodiment, the grinding of the paste is performed in a two-cylinder grinder provided with a cylinder temperature control system. This type of grinders allows the temperature at which the grinding is performed to be adjusted, heating or cooling the grinding cylinders also individually, as a function of the characteristics of the paste or the desired characteristics for the final product.

After the crushing and subsequent drying, advantageously, the coloring composition is subjected to a further grinding step for reducing any lumps and agglomerates. This further grinding therefore has the function of obtaining granules of the coloring composition having the desired dimensions. This further grinding is preferably performed in a micronizer provided with a screen, preferably cooled, so as to obtain a powder product having the desired particle size distribution. The particle size of the powdered coloring composition is selected considering that:
- as the average diameter of the particles decreases, the dispersion/solubilization speed of the powders in the liquid phase to be colored increases,
- an excessively low average particle size can cause problems of emissions of powders into the work environment during the production process in which the coloring composition is used.

Preferably, in solid coloring compositions at least 90% by weight, more preferably at least 95% by weight, of the particles has a diameter less than or equal to 3 mm, preferably less than or equal to 1 mm; i.e. at least 90% by weight, more preferably at least 95% by weight, of the solid coloring composition passes through the meshes of a sieve (screen) having the aforesaid dimensions.

Preferably, in solid coloring compositions at least 90% by weight, more preferably at least 95% by weight, of the particles that form the powdered coloring composition has a diameter greater than or equal to 0.05 mm, preferably greater than or equal to 0.1 mm; i.e. at least 90% by weight, more preferably at least 95% by weight, of the solid coloring composition is withheld by the meshes of a sieve having the aforesaid dimensions.

For the purpose of the present invention, the aforesaid particle diameter values correspond to the diameter of the individual circular mesh of the sieve or to the side of the individual square mesh of the sieve.

The Applicant has found that powders having a particle diameter comprised between 0.1 and 1 mm allow a pigment to be dispersed in a liquid phase at a more than acceptable speed for most industrial coloring processes, allowing powdery emissions to be suitably contained.

As mentioned, the solid coloring compositions according to the present invention may be used to incorporate pigments into aqueous, organic and inorganic liquid phases, into liquid phases without solvents, substantially of any kind, using conventional mixing and dispersion systems.

The liquid phases to be colored can be purely water based; comprise a mixture of water and organic solvents miscible with water (e.g. alcohol); or may be based on organic solvents only such as alcohol, ethers, ketones, esters, etc.; but also inorganic liquid phases such as mineral oils and white spirit for example. The liquid phases that can be colored with the solid coloring compositions of the present invention also comprise phases formed by plastic materials in the molten state.

According to the present invention, to color a liquid phase, the coloring compositions are incorporated into the liquid phase, e.g. through mechanical stirring.

In the case of coloring plastic materials, the solid coloring compositions according to the present invention can be advantageously incorporated into said plastic materials through extrusion or molding processes, e.g. injection molding.

A preferred coloring process, for example, comprises the steps of:
- mixing at least one solid coloring composition according to the present invention with a melt-processable polymer (e.g. an extrudable or moldable polymer) for forming a melt-processable polymer composition;
- processing by melting said polymeric composition (e.g. by extrusion or molding).

In particular, experimental tests have shown that the coloring compositions according to the present invention allow pigments to be incorporated effectively and quickly into: aqueous liquid phases (pigment dispersion time: about 10 seconds), polyurethane liquid compositions in toluene/alcohol (30 seconds), polyurethane liquid compositions in dimethylformamide (1 minute), polyurethane adhesives in ethyl acetate (2 minutes), plasticizers free from solvents (2 minutes), PVC plastisols (3 minutes).

The solid color compositions according to the present invention can also be used in the form of pigment pastes. For that purpose, the solid coloring composition is mixed with water or another analogous liquid component to the liquid phase to be colored, in a ratio by weight such as to generate a paste having a desired viscosity; the viscosity is selected as a function of the specific use for which the pigment is intended. The pigment paste thus obtained is subsequently added to the liquid phase that is to be colored. The pigment paste can also comprise other components that must be incorporated into the liquid phase to be colored.

The solid coloring compositions according to the present invention can be used for incorporating pigments into liquid compositions of any kind and nature, used in a multitude of production processes. In particular, the solid coloring compositions according to the present invention can be used to confer a color to a wide variety of products such as, for example, inks, coating compositions (e.g. paints, enamels), resins and polymers for the textile and leather sector, plasticizers, reactive systems free from solvents for foams, for footwear, etc., food products, cosmetic products, pharmaceuticals, detergents, etc.. In particular, it is to be noted that as the PEG is an edible compound, using pigments suitable for edible use (e.g. food colorings) it is possible to color edible preparations, such as creams, puddings, edible inks, etc.. This notably extends the variety of possible uses of the solid coloring compositions with respect to what has been observed in the state of the art. The coloring performance of an organic pigment prepared in the form of a solid coloring composition according to the present invention is up to 80% higher with respect to the coloring performance of the same pigment used as such or in pigmentary pastes known in the state of the art.

The solid coloring compositions according to the present invention are furthermore characterized by their versatility of use, being usable both in powder form and in pigmentary paste form, the viscosity of which can be selected on the basis of the user's needs.

The pigment dispersions according to the present invention can further be prepared cheaply, simply and with conventional equipment.

The following embodiment example is provided merely to illustrate the present invention and should not be construed in a sense that would limit the scope of protection defined by the claims.

### EXAMPLE

### EXAMPLES 1-2 (according to the invention)

Solid coloring compositions according to the present invention were prepared in a horizontal Z-blade mixer starting from pastes having the compositions shown in Table 1.

**Table 1**

| | Example 1 | Example 2 |
|---|---|---|
| Ingredients | Quantity (parts by weight) | Quantity (parts by weight) |
| Diarylide yellow (Color Index -C.I.-PY 83) | 100 | **--** |
| Phthalocyanine blue (Color Index - C.I.-PB 15:3) | -- | 100 |
| PEG (MWn = 600) | 12 | 26 |
| Docusate sodium | 11 | 6 |
| Polymeric wetting agent (Byk LP-N 21708) | 10 | -- |
| Ethanol | 13 | -- |
| Acetone | -- | 10 |

Each paste was then ground in a two-cylinder grinder to the desired pigment grinding fineness, and then heated until a sufficiently solid and dry product was obtained.

The ground product was dried in the oven (120°C, 60 minutes) and then ground further in a micronizer with a screen (circular meshes with diameter 0.5 mm), obtaining a powdered coloring composition.

The coloring composition of example 1 was incorporated as such at room temperature (20°C) in a first aliquot (V1) of a water based acrylic polyurethane paint through a conventional mixer provided with a helical propeller for obtaining an enamel for metals.

Thanks to the use of the PEG as a carrier agent, the pigment was dispersed into the paint in a few seconds, conferring a bright and uniform color thereto.

By comparison, the same quantity of the same pigment was added to a second aliquot (V2) of the same paint, using a dispersion in the form of a water-based pigmentary paste of the conventional type and commercially available (Plastovel DA 059, by the same Applicant). This type of paste is obtained by directly grinding the pigment into the base paste. The comparative test was performed through blending the two paints with white pigment. For that purpose, to each of the aliquots V1 and V2 the same amount of a white pigmentary paste was added (based on titanium dioxide) in an amount such as to have a ratio by weight of "yellow pigment / white pigment" equal to 1:7. The two blended paints thus obtained were spread to a thickness of 200 micron onto Morest paper and dried in the oven.

The paint V1 colored with the coloring composition according to the present invention had a more intense and bright yellow color. The paint V1 was then further blended with further amounts of the same white pigmentary paste until the same color intensity as the paint V2 was reached.

The ratio between the amount of white paste used in the paint V1 and that used in the paint V2 indicates that the coloring composition according to the present invention has a coloring performance 21% greater than the comparative pigmentary paste, as well as a greater color brightness and clarity.

Comparable results to those of Example 1 were observed for the pigment formulated according to Example 2. The coloring composition according to Example 2, in which the polymeric wetting agent is absent and there is instead a higher amount of PEG, has the additional advantage, with respect to the composition of Example 1, of higher storage stability, featuring a lower tendency towards the formation of agglomerates, reducing moreover the formulation cost.

## Claims

1. Solid coloring composition comprising:
- at least one pigment;
- at least one polyethylene glycol having a number average molecular weight (Mₙ) within the range 300 D - 1800 D, said polyethylene glycol being in an amount within the range 1 - 60% by weight with respect to the total weight of said at least one pigment.

2. Solid coloring composition according to the previous claim, wherein said polyethylene glycol has a number average molecular weight (Mₙ) within the range 400 D - 1000 D.

3. Solid coloring composition according to claim 1, wherein said polyethylene glycol has a melting point within the range 0°C - 50°C, preferably within the range 15°C - 35°C.

4. Solid coloring composition according to claim 1, wherein said polyethylene glycol is present in an amount comprised within the range 5% - 40% by weight, preferably within the range 9% - 15% by weight, with respect to the total weight of said at least one pigment.

5. Solid coloring composition according to claim 1, wherein said polyethylene glycol is present in an amount comprised within the range 20% - 35% by weight with respect to the total weight of the pigment, preferably within the range 22% - 32%, more preferably within the range 24% - 30%.

6. Solid coloring composition according to claim 1 comprising one or more additives selected from: surfactants, wetting agents, dispersing agents, spreading agents, emulsifying agents.

7. Solid coloring composition according to the preceding claim, wherein said at least one additive is selected from: sodium docusate, sodium lauryl sulfate, sodium laurylether, linseed oil, soybean oil, glycerine, and mixtures thereof.

8. Solid coloring composition according claim 1, wherein the particles of said pigment have an average particle size (Dv50) in the range 0.02 - 100 micrometers (µm), more preferably in the range 0.05 - 50 micrometers, more preferably in the range 0.1 - 30 micrometers.

9. Solid coloring composition according to claim 1, wherein at least 90% by weight, preferably at least 95% by weight, of the particles forming the solid coloring composition have a diameter less than or equal to 3 mm, preferably less than or equal to 1 mm.

10. Solid coloring composition according to claim 1, wherein at least 90% by weight, preferably at least 95% by weight, of the particles forming the solid coloring composition have a diameter greater than or equal to 0.05 mm, preferably greater than or equal to 0.1 mm.

11. Pigment paste comprising at least one solid coloring composition according to claim 1.

12. Process for preparing a solid coloring composition according to claim 1 that comprises:
(a) forming a paste comprising:
- at least one pigment,
- at least one polyethylene glycol having a number average molecular weight (Mₙ) within the range 300 D - 1800 D, said polyethylene glycol being in an amount within the range 1% - 60% by weight with respect to the total weight of said at least one pigment,
- optionally, at least one liquid component to regulate the viscosity of the paste;
(b) grinding said paste;
(c) drying said paste to obtain said solid coloring composition.

13. Process for coloring a liquid phase comprising:
(I) providing a solid coloring composition comprising:
- at least one pigment;
- at least one polyethylene glycol having a number average molecular weight (Mₙ) within the range 300 D - 1800 D, said polyethylene glycol being in an amount within the range 1 - 60% by weight with respect to the total weight of said at least one pigment;
(II) incorporating said solid coloring composition into said liquid phase.

14. Use of a solid coloring composition according to claim 1 as a masterbatch for incorporating at least one pigment into a melt-processable polymer material.

15. Method for coloring a melt-processable polymer material comprising:
- mixing at least one solid coloring composition according to claim 1 with a melt-processable polymer for forming a melt-processable polymer composition;
- melt-processing said polymeric composition, preferably by extrusion or molding.
